# EUROPÄISCHE PATENTSCHRIFT

(11) **EP 1 519 994 B1**
(45) Veröffentlichungstag und Bekanntmachung des Hinweises auf die Patenterteilung: **05.05.2010**
(21) Anmeldenummer: 03763628.9
(22) Anmeldetag: 28.05.2003
(51) Int. Cl.: C09D 5/00, C09K 3/14

(54) **VERFAHREN ZUR HERSTELLUNG EINER TENSIDFREIEN SUSPENSION AUF WÄSSRIGER BASIS VON NANOSTRUKTURIERTEN, HYDROPHOBEN PARTIKELN UND DEREN VERWENDUNG**
METHOD FOR PRODUCING A SURFACTANT-FREE SUSPENSION BASED ON NANOSTRUCTURED, HYDROPHOBIC PARTICLES, AND USE OF THE SAME
PROCEDE POUR PRODUIRE UNE SUSPENSION SANS TENSIOACTIF, A BASE DE PARTICULES HYDROPHOBES NANOSTRUCTUREES, ET UTILISATION DE LADITE SUSPENSION

(30) Priorität: 13.07.2002 DE 10231757
(43) Veröffentlichungstag der Anmeldung: 06.04.2005
(73) Patentinhaber: Evonik Degussa GmbH, 45128 Essen (DE)
(72) Erfinder: OLES, Markus, 45525 Hattingen (DE); NUN, Edwin, 48727 Billerbeck (DE); SCHLEICH, Bernhard, 45657 Recklinghausen (DE)
(86) Internationale Anmeldenummer: PCT/EP2003/005610
(87) Internationale Veröffentlichungsnummer: WO 2004/007625

(56) Entgegenhaltungen:
- WO-A-02/16526
- US-A- 4 664 697

## Beschreibung

Gegenstand der vorliegenden Erfindung ist ein Verfahren zur Herstellung einer tensidfreien Suspension, die hydrophobe Partikel und zumindest 50,01 Gew.-% Wasser aufweist, wobei hydrophobe, nanostrukturierte Partikel in zumindest einem organischen Lösungsmittel, das mit Wasser mischbar ist und das einen Siedepunkt kleiner 150°C aufweist, suspendiert werden und anschließend diese konzentrierte organische Suspension mit tensidfreiem Wasser intensiv durchmischt wird.

Suspensionen von hydrophoben, nanostrukturierten Partikeln werden bei der Herstellung von schmutz- und wasserabweisenden Beschichtungen auf Gegenständen verwendet, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist.

Das Prinzip von selbstreinigenden Beschichtungen ist allgemein bekannt. Zum Erzielen einer guten Selbstreinigung einer Oberfläche muss die Oberfläche neben einer sehr hydrophoben Oberfläche auch eine gewisse Rauhigkeit aufweisen. Eine geeignete Kombination aus Struktur und Hydrophobie macht es möglich, dass bereits geringe Mengen bewegten Wassers auf der Oberfläche haftende Schmutzpartikel mitnehmen und die Oberfläche reinigen (WO 96/04123, US 3,354,022).

In der Patentschrift US 4,664,679 wird eine wässrige Dispersion aus Siliciumanhydrid und einem wässrigen Lösemittel beschrieben, wobei das Siliciumanhydrid mittels eines Trockenverfahrens hergestellt wurde. Es ist möglich, die wässrige Siliciumanhydrid Dispersion ausschließlich aus durch Trockenverfahren gewonnenen Siliciumanhydriden zu erzeugen. Mittels naßtechnischer Verfahren können auch Silica-Partikel hergestellt werden. Diese weisen wegen ihres höheren Wassergehaltes eine große Hygroskopizität auf. Sie sind somit zur Herstellung wässriger Dispersionen nicht geeignet.

Die wässrige Siliciumanhydrid Dispersion ist für Feinschliffarbeiten an Oberflächen, zum Beispiel an Halbleitermaterialien geeignet, sowie als Blockierschutz für Beschichtungen oder als Hafthilfsmittel für Glasfasermaterialien hilfreich. Insbesondere für die beiden letzteren Einsatzzwecke ist eine möglichst dauerhafte Modifikation der mit der Siliciumanhydrid Dispersion behandelten Oberflächen von Nutzen.

Stand der Technik ist gemäß EP 0 933 388, dass für solche selbstreinigenden Oberflächen ein Aspektverhältnis von > 1 und eine Oberflächenenergie von weniger als 20 mN/m erforderlich ist. Das Aspektverhältnis ist hierbei definiert als der Quotient von Höhe zur mittleren Breite der Struktur. Vorgenannte Kriterien sind in der Natur, beispielsweise auf der Oberfläche des Lotusblattes, realisiert. Die aus einem hydrophoben, wachsartigen Material gebildete Oberfläche der Pflanze weist Erhebungen auf, die bis zu einigen µm voneinander entfernt sind. Wassertropfen kommen im Wesentlichen nur mit den Spitzen dieser Erhebungen in Kontakt. Solche wasserabstoßenden Oberflächen werden in der Literatur vielfach beschrieben.

CH 268 258 beschreibt ein Verfahren, bei dem durch Aufbringen von Pulvern, wie Kaolin, Talkum, Ton oder Silicagel, strukturierte Oberflächen erzeugt werden. Die Pulver werden durch Öle und Harze auf Basis von Organosiliziumverbindungen auf der Oberfläche fixiert (Beispiele 1 bis 6).

EP 0 909 747 beschreibt ein Verfahren zur Erzeugung einer selbstreinigenden Oberfläche. Die Oberfläche weist hydrophobe Erhebungen mit einer Höhe von 5 µm bis 200 µm auf. Hergestellt wird eine derartige Oberfläche durch Aufbringen einer Dispersion von Pulverpartikeln und einem inerten Material in einer Siloxan-Lösung und anschließendem Aushärten. Die strukturbildenden Partikel werden durch ein Hilfsmedium am Substrat fixiert.

WO 00/58410 kommt zu dem Ergebnis, dass es technisch möglich ist, Oberflächen von Gegenständen künstlich selbstreinigend zu machen. Die hierfür nötigen Oberflächenstrukturen aus Erhebungen und Vertiefungen haben einen Abstand zwischen den Erhebungen der Oberflächenstrukturen im Bereich von 0,1 µm bis 200 µm und eine Höhe der Erhebung im Bereich 0,1 µm bis 100 µm. Die hierfür verwendeten Materialien müssen aus hydrophoben Polymeren oder dauerhaft hydrophobiertem Material bestehen. Ein Lösen der Teilchen aus der Trägermatrix muss verhindert werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US 5,599,489 offenbart ein Verfahren, bei dem eine Oberfläche durch Beschuss mit Partikeln einer entsprechenden Größe und anschließender Perfluorierung besonders abweisend ausgestattet werden kann. Ein anderes Verfahren beschreibt H. Saito et al. in "Service Coatings International" 4 (1997), 168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung dargestellt wurden.

Das Prinzip der selbstreinigenden Oberflächen ist der Natur entlehnt. Kleine Kontaktflächen erniedrigen die Van-der-Waals-Wechselwirkung, die für die Haftung an ebenen Oberflächen mit niedriger Oberflächenenergie verantwortlich ist. Beispielsweise sind die Blätter der Lotuspflanze mit Erhebungen aus einem Wachs versehen, die die Kontaktfläche zum Wasser herabsetzen.

Verfahren zur Herstellung dieser strukturierten Oberflächen sind ebenfalls bekannt. Neben der detailgetreuen Abformung dieser Strukturen durch eine Masterstruktur im Spritzguss oder Prägeverfahren sind auch Verfahren bekannt, die das Aufbringen von Partikeln auf eine Oberfläche nutzen (DE 100 22 246 A1).

JP 07328532 A beschreibt einen wasserabweisenden Film, der Partikel mit einem Durchmesser von 1 nm bis 1 mm aufweist. In dem beschriebenen Verfahren wird zunächst ein Lack aufgetragen, anschließend werden die hydrophoben Partikel, z.B. AEROSIL^{®}, aufgetragen, wichtig ist hierbei dass der Lack ungehärtet oder nur teilgehärtet vorliegt. Nach dem Aushärten des Lacks werden die überschüssigen Partikel entfernt.

In DE 100 49 338 beschreibt die BASF eine mikrostrukturierte, selbstreinigende katalytisch aktive Oberfläche, sowie ein Verfahren zu deren Herstellung. Dies hat den Vorteil, dass das katalytisch aktive Material in den Vertiefungen vor Vergiftung weitestgehend geschützt ist, so dass die Oberfläche insgesamt katalytisch aktiv bleibt. Auf diese Weise können Heterogenkatalysatoren hergestellt werden, bei deren Verwendung die Entfernung von den Katalysator desaktivierenden Störpartikeln aus dem Eduktstrom nicht mehr notwendig ist.

In neuerer Zeit ist versucht worden, selbstreinigende Oberflächen auch auf Textilien bereitzustellen. Es wurde gefunden, dass beispielsweise durch Aufbringen von hydrophoben, pyrogenen Kieselsäuren auf Textilien selbstreinigende Oberflächen erzeugt werden können. Die hydrophoben, pyrogenen Kieselsäuren werden hierbei unter Einwirkung eines Lösungsmittels in die Polymermatrix der Textilfaser eingebunden.

In DE 101 18 348 werden Polymerfasern mit selbstreinigenden Oberflächen beschrieben, bei denen die selbstreinigende Oberfläche durch
- Einwirken eines Lösungsmittels, welches strukturbildende Partikel aufweist,
- Anlösen der Oberfläche der Polymerfasern durch das Lösungsmittel,
- Anheften der strukturbildenden Partikel an die angelöste Oberfläche und
- Entfernen des Lösungsmittels
   erhalten wird. Ein Nachteil dieses Verfahrens besteht darin, dass beim Verarbeiten der Polymerfasern (Spinnen, Stricken, etc.) die strukturbildenden Partikel und damit die Struktur, welche die selbstreinigende Oberfläche bewirkt, beschädigt werden können oder unter Umständen sogar ganz verloren gehen können und damit der Selbstreinigungseffekt ebenfalls verloren geht. Ein weiterer Nachteil ist die Verwendung von Lösungsmitteln. Aus ökologischen Gründen muss hier ein hoher apparativer und sicherheitstechnischer Aufwand betrieben werden.

In DE 101 18 346 werden textile Flächengebilde mit selbstreinigender und wasserabweisender Oberfläche, aufgebaut aus mindestens einem synthetischen und/oder natürlichen textilen Basismaterial A und einer künstlichen, mindestens teilweise hydrophoben Oberfläche mit Erhebungen und Vertiefungen aus Partikeln, die ohne Klebstoffe, Harze oder Lacke mit dem Basismaterial A fest verbunden sind, beschrieben, die durch Behandlung des Basismaterials A mit zumindest einem Lösungsmittel, welches die Partikel ungelöst enthält, und Entfernen des Lösungsmittels, wobei zumindest ein Teil der Partikel mit der Oberfläche des Basismaterials A fest verbunden werden, erhalten werden. Der Nachteil dieses Verfahrens beruht allerdings auf einer sehr aufwändigen Veredelung der Textiloberflächen. Bei diesem Prozess ist es nötig, dass das Lösungsmittel genau auf das Basismaterial der Textilien abgestimmt werden muss. Bei Kleidungsstücken liegen in der Regel aber Mischgewebe vor, wodurch diese Abstimmung zusätzlich kompliziert wird. Bei ungenauer Abstimmung der Lösungsmittel kann es zur Zerstörung von Teilen des Kleidungsstückes kommen. Eine Behandlung der textilen Oberflächen ist also vor dem Schneidern nötig.

All diese Beschichtungen haben den Nachteil, dass sie permanent auf die Gegenstände aufgebracht sind und damit bei einem Verkratzen, einer Verfärbung oder einer andersartigen Beschädigung der Oberfläche bzw. Oberflächenstruktur diese nicht einfach entfernt und wieder neu aufgebracht werden können. Bei einer solchen Beschädigung muss der Gegenstand entweder aufwändig von der Oberflächenstruktur befreit und erneut behandelt oder entsorgt werden.

WO 00/58410 beschreibt ein Verfahren zur Herstellung von ablösbaren Beschichtungen mit schmutz- und wasserabweisenden Eigenschaften, wobei die Selbigen durch Aufsprühen von hydrophoben Alkoholen, wie Nonacosan-10-ol, oder Alkandiolen, wie Nonacosan-5,10-diol, oder Wachsen hergestellt werden. Diese Beschichtungen sind durch starke mechanische Kräfte, wie z.B. Kratzen, Bürsten oder Hochdruckbehandlung mit Wasser oder durch eine Behandlung mit Wasser, welches Detergenzien enthält, die einen Teil der Strukturbildner auflösen, von den Gegenständen zu entfernen. Nachteilig hieran sind die starken Kräfte die notwendig sind, um die Beschichtung mechanisch wieder zu entfernen, so dass immer die Gefahr besteht, dass beim Entfernen der Beschichtung auch der Gegenstand selbst beschädigt wird. Eine Behandlung mit Wasser, welches Detergenzien enthält, kann ebenfalls je nach Beschaffenheit des Gegenstandes zur Beschädigung desselben führen.

In DE 101 35 157 wird ein Verfahren zur Beschichtung von Textilien während eines chemischen Reinigungsvorgangs beschrieben, bei dem strukturbildende Partikel dem Reinigungsmittel zugegeben werden. Als Reinigungsmittel werden relativ gesundheitsbedenkliche organische Lösungsmittel, wie z.B. Trichlorethylen, vorgeschlagen, deren Verwendung zu einer mechanischen Verankerung der Partikel an der Struktur der Textilien führt. Eine Handhabung außerhalb geschlossener Kreisläufe ist, falls in einigen Staaten gesetzeskonform, ökologisch bedenklich.

DE 28 44 052 beschreibt ein Verfahren zur Herstellung von inversen wässrigen Dispersionen einer hydrophoben Kieselsäure. Bei diesem Verfahren wird die hydrophobe Kieselsäure und das Wasser gegebenenfalls unter Zusatz eines Netzmittels intensiv vermischt. Es bildet sich das sogenannte "Trockene-Wasser", bei dem feinste Wassertröpfchen mit einer Schicht Kieselsäure umhüllt sind. Die erhaltene Dispersion ist laut den aufgeführten Beispielen pastös bis rieselfähig.

Für die Anwendung zur Herstellung von selbstreinigenden Oberflächen sind solch pastöse Dispersionen oder rieselfähige Gemenge nicht geeignet. Für die Herstellung von selbstreinigenden Oberflächen werden daher in WO 00/58410 Suspensionen von hydrophoben Partikeln auf der ausschließlichen Basis von organischen Lösungsmitteln eingesetzt. Bei der Ausbildung der selbstreinigenden Oberflächen entweichen somit größere Mengen an organischen Lösungsmitteln.

Aufgabe der vorliegenden Erfindung war es deshalb, ein Verfahren zur Herstellung von tensidfreien Suspensionen von hydrophoben, nanostrukturierten Partikeln auf Wasserbasis für die Herstellung von schmutz- und wasserabweisenden Beschichtungen auf Gegenständen bereitzustellen. Diese Beschichtung soll auch bei Gegenständen aus empfindlichen Materialien relativ stabil sein. Des weiteren soll die schmutz- und wasserabweisende Beschichtung mit einfachen Mitteln, d.h. ohne den Einsatz von organischen Lösungsmitteln oder starken mechanischen Kräften, wie Scheuern oder Schrubben, abzulösen sein. Die Suspension der hydrophoben, nanostrukturierten Partikel soll weitestgehend auf Wasserbasis sein, um den Anteil der in die Umwelt entweichenden organischen Lösungsmittel soweit als möglich gering zu halten.

Überraschenderweise wurde gefunden, dass sich eine wässrige, tensidfreie Suspension von hydrophoben, nanostrukturierten Partikeln herstellen lässt, indem man die hydrophoben, nanostrukturierten Partikel zunächst in einem organischen Lösungsmittel oder einem Lösungsmittelgemisch suspendiert und anschließend diese konzentrierte Suspension an Partikeln mit tensidfreiem Wasser intensiv durchmischt. Durch Aufbringen dieser wässrigen, tensidfreien Suspension auf die Oberfläche eines Gegenstands und das anschließende Entfernen des Suspensionsmediums können Beschichtungen mit schmutz- und wasserabweisenden Eigenschaften erhalten werden, die relativ stabil bei Beregnung sind, jedoch mit einfachen Mitteln wieder entfernt werden können. Überraschend ist vor allem die Tatsache, dass homogene, tensidfreie Suspensionen äußerst hydrophober Partikel in einem wasserbasierten Suspensionsmedium möglich sind und dass diese Suspensionen zur Erzeugung hydrophober, nanostrukturierter Oberflächen verwendet werden können.

Gegenstand der vorliegenden Erfindung ist deshalb ein Verfahren gemäß Anspruch 1 zur Herstellung einer tensidfreien Suspension, die hydrophobe Partikel und zumindest 50,01 Gew.-% Wasser aufweist, wobei hydrophobe, nanostrukturierte Partikel, die ausgewählt sind aus Mineralien, Aluminiumoxid, Silikaten, Kieselsäuren, Metalloxiden, Mischoxiden, Metallpulvern, Pigmenten oder Polymeren, in zumindest einem organischen Lösungsmittel, das mit Wasser mischbar ist und das einen Siedepunkt kleiner 150 °C aufweist, suspendiert werden und anschließend diese konzentrierte organische Suspension mit tensidfreiem Wasser intensiv durchmischt wird, wobei als nanostrukturierte Partikel solche Partikel eingesetzt werden, die auf der Oberfläche unregelmäßige Strukturen mit Höhen, Breiten und Abständen im Bereich von 1 nm bis 1000 nm aufweisen.

Ebenso sind Gegenstand der Erfindung wässrige Suspensionen, die gemäß zumindest einem der Ansprüche 1 bis 7 hergestellt werden, und deren Verwendung zur Herstellung von ablösbaren, schmutz- und wasserabweisenden Beschichtungen auf Gegenständen. Ferner ist Gegenstand der Erfindung ein Verfahren zur Herstellung einer ablösbaren, schmutz- und wasserabweisenden Beschichtung auf Gegenständen. Bei dieser Beschichtung werden hydrophobe Partikel auf die Oberfläche der Gegenstände aufgebracht und so eine Oberflächenstruktur mit Erhebungen auf der Oberfläche der Gegenstände erzeugt, die schmutz- und wasserabweisende Eigenschaften aufweist, wobei eine Suspension hergestellt gemäß zumindest einem der Ansprüche 1 bis 7 auf zumindest eine Oberfläche eines Gegenstandes aufgebracht wird und das Suspensionsmedium anschließend entfernt wird.

Des weiteren sind Gegenstand der vorliegenden Erfindung Gegenstände, die auf zumindest einer Oberfläche eine wasser- und schmutzabweisende Beschichtung aufweisen, hergestellt nach einem Verfahren gemäß zumindest einem der Ansprüche 13 bis 16.

Im übrigen ist Gegenstand der vorliegenden Erfindung eine Schutzbeschichtung hergestellt gemäß einem der Ansprüche 13 bis 16, sowie ein Imprägnierspray, welches eine erfindungsgemäße Suspension aufweist.

Die vorliegende Erfindung beschreibt ein Verfahren zur Herstellung von tensidfreien Suspensionen auf Wasserbasis von hydrophoben, nanostrukturierten Partikeln, die für die Herstellung von ablösbaren, schmutz- und wasserabweisenden Beschichtungen verwendet werden können.

Die Erfindung hat den Vorteil, dass auf einfache Art und Weise Gegenstände mit einer schmutz- und wasserabweisenden nicht-permanenten Schicht ausgerüstet werden können, wobei die Auswahl der Gegenstände, die mit einer solchen Beschichtung ausgerüstet werden können, nur durch die Verträglichkeit gegenüber und der Benetzbarkeit von dem überwiegend wässrigen Suspensionsmedium bestimmt wird.
Im Gegensatz zu den Verfahren gemäß dem Stand der Technik ist die erfindungsgemäße Beschichtung mit einer ablösbaren, schmutz- und wasserabweisenden Schicht relativ umwelt-und gesundheitsschonend, da beim Aufbringen dieser Beschichtung nur Wasser und geringe Mengen an organischen Lösungsmittel freigesetzt werden, die als Suspensionsmedium eingesetzt werden. Ein weiterer Vorteil dieser Beschichtung mittels dieser erfindungsgemäßen Suspension ist das Ablösen der Beschichtung durch Wasser mit leicht erhöhtem Druck, wobei dies ohne die Verwendung von Detergenzien erfolgen kann.

Die mittels des erfindungsgemäßen Verfahrens hergestellte Beschichtung ist nicht permanent und eignet sich deshalb besonders gut als Schutzbeschichtung von neuen Gegenständen und Waren vor Verschmutzung, z.B. beim Transport oder in Verkaufs- oder Präsentationsräumen. Die erfindungsgemäßen Schutzbeschichtungen sind problemlos durch Einwirken von Flüssigkeitstropfen unter erhöhtem Druck wieder ablösbar.

Das erfindungsgemäße Verfahren zur Herstellung einer tensidfreien Suspension, die hydrophobe Partikel und zumindest 50,01 Gew.-%, vorzugsweise zumindest 60,00 Gew.-% und besonders bevorzugt zumindest 80,00 Gew.-% Wasser aufweist, zeichnet sich dadurch aus, dass hydrophobe, nanostrukturierte Partikel, ausgewählt aus Mineralien, Aluminiumoxid, Silikaten, Kieselsäuren, Metalloxiden, Mischoxiden, Metallpulvern, Pigmenten oder Polymeren, in zumindest einem organischen Lösungsmittel, das mit Wasser mischbar ist und das einen Siedepunkt kleiner 150°C aufweist, suspendiert werden und anschließend diese konzentrierte organische Suspension mit tensidfreiem Wasser intensiv durchmischt wird, wobei als nanostrukturierte Partikel solche Partikel eingesetzt werden, die auf der Oberfläche unregelmäßige Strukturen mit Höhen, Breiten und Abständen im Bereich von 1 nm bis 1000 nm aufweisen.

Im ersten Schritt des erfindungsgemäßen Verfahrens werden hydrophobe, nanostrukturierte Partikel in zumindest einem organischen Lösungsmittel suspendiert. Das eingesetzte organische Lösungsmittel ist mit Wasser mischbar und weist einen Siedepunkt kleiner 150 °C, bevorzugt von kleiner 120 °C, besonders bevorzugt von kleiner 100 °C auf. Als organisches Lösungsmittel wird vorzugsweise Aceton, Tetrahydrofuran oder ein bei Raumtemperatur flüssiger Alkohol, insbesondere Methanol, Ethanol, n-Propanol oder Isopropanol, eingesetzt. Ganz besonders bevorzugt wird Ethanol als Alkohol eingesetzt. Es kann aber auch vorteilhaft sein, wenn die erfindungsgemäße Suspension eine Mischung dieser organischen Lösungs-mittel aufweist.

Als Partikel werden in dem erfindungsgemäßen Verfahren solche eingesetzt, die zumindest ein Material, ausgewählt aus Mineralien, Aluminiumoxid, Silikaten, Kieselsäuren, Metalloxiden, Mischoxiden, Metallpulvern, Pigmenten oder Polymeren, aufweisen. Bevorzugt können die Partikel dotierte Silikate, Fällungskieselsäuren oder pyrogene Kieselsäuren (Aerosile^{®}) oder pulverförmige Polymere, wie z.B. sprühgetrocknete und agglomerierte Emulsionen oder cryogemahlenes PTFE, sein.

Vorzugsweise werden Partikel in dem erfindungsgemäßen Verfahren eingesetzt, die einen mittleren Partikeldurchmesser von 0,01 µm bis 100 µm, besonders bevorzugt von 0,02 µm bis 50 µm und ganz besonders bevorzugt von 0,05 µm bis 30 µm aufweisen. Geeignet sind aber auch Partikel, die sich im Trockenzustand aus Primärteilchen zu Agglomeraten oder Aggregaten mit einer Größe von 0,2 µm bis 100 µm zusammenlagern.

Die in dem erfindungsgemäßen Verfahren eingesetzten Partikel weisen eine strukturierte Oberfläche auf, die unregelmäßige Strukturen mit Höhen, Breiten und Abständen im Bereich von 1 nm bis 1000 nm aufweist, vorzugsweise im Bereich von 2 nm bis 750 nm und besonders bevorzugt von 10 nm bis 100 nm. Unter Feinstruktur werden Strukturen verstanden, die Höhen, Breiten und Abstände in den genannten Bereichen aufweisen. Solche hydrophoben, nanostrukturierten Partikel weisen vorzugsweise zumindest eine Verbindung, ausgewählt aus pyrogener Kieselsäure, Fällungskieselsäuren, Titandioxid, Zirkoniumdioxid oder pulverförmig Polymeren, auf.

Die hydrophoben Eigenschaften der in dem erfindungsgemäßen Verfahren verwendeten Partikel können durch das verwendete Material der Partikel inhärent vorhanden sein, wie beispielsweise beim Polytetrafluorethylen (PTFE). Es können aber auch hydrophobe Partikel eingesetzt werden, die nach einer geeigneten Behandlung hydrophobe Eigenschaften aufweisen, wie z.B. mit zumindest einer Verbindung aus der Gruppe der Alkylsilane, der Fluoralkylsilane und/oder der Disilazane behandelte Partikel. Als Partikel eignen sich im Besonderen hydrophobierte pyrogene Kieselsäuren, sogenannte Aerosile^{®}. Beispiele für hydrophobe Partikel sind z.B. Aerosil^{®} VPR 411, Aerosil^{®} VP LE 8241 oder Aerosil^{®} R 8200. Beispiele für durch eine Behandlung mit Perfluoralkylsilan und anschließende Temperung hydrophobierbare Partikel sind z.B. Aeroperl 90/30^{®}, Sipernat Kieselsäure 350^{®}, Aluminiumoxid C^{®}, Zirkonsilikat, vanadiumdotiert oder Aeroperl P 25/20^{®}.

Die hydrophoben, nanostrukturierten Partikel werden in dem erfindungsgemäßen Verfahren in einem organischen Lösungsmittel oder in einem Gemisch davon homogen suspendiert. Hierfür werden vorzugsweise von 0,01 Gew.% bis 10,00 Gew.-%, bevorzugt von 0,05 Gew.-% bis 5,00 Gew.-% und ganz besonders bevorzugt von 0,10 Gew.-% bis 2,50 Gew.-% hydrophobe Partikel, bezogen auf die herzustellende erfindungsgemäße Suspension, eingesetzt. Die hierfür verwendete Menge an organischem Lösungsmittel entspricht bevorzugt von 0,10 Gew.-% bis 49,98 Gew.-% der herzustellenden erfindungsgemäßen Suspension, jedoch besonders bevorzugt von 0,50 Gew.-% bis 49,98 Gew.-% und ganz besonders bevorzugt von 4,00 Gew.-% bis 49,98 Gew.-%.

Diese hochkonzentrierte Suspension der hydrophoben, nanostrukturierten Partikel in einem organischen Lösungsmittel oder einem organischen Lösungsmittelgemisch wird nun in einem weiteren Verfahrensschritt des erfindungsgemäßen Verfahrens mit tensidfreiem Wasser intensiv durchmischt. In einer bevorzugten Ausführungsform des erfindungsgemäßen Verfahrens wird die organische Suspension der hydrophoben, nanostrukturierten Partikel mittels einer Dosiervorrichtung in eine Mischkammer zugegeben, in der das vorgelegte, tensidfreie Wasser heftig durchmischt wird. In einer weiteren Ausführungsform des erfindungsgemäßen Verfahrens wird das tensidfreie Wasser mittels einer Dosiervorrichtung in eine Mischkammer zugegeben, in der die vorgelegte organische Suspension der hydrophoben, nanostrukturierten Partikel heftig durchmischt wird.

Als Wasser wird in dem erfindungsgemäßen Verfahren bevorzugt vollentmineralisiertes Wasser, jedoch besonders bevorzugt destilliertes Wasser verwendet. Zur Zerstörung evtl. vorhandener Agglomerate ist es vorteilhaft das Suspendieren der hydrophoben Partikel mit hohen Scherenergieeinträgen, beispielsweise mittels Dissolverscheibe, durchzuführen. Der Einsatz von Turbolenz erhöhenden Einbauten, wie Strömungsbrecher oder andere Hindernisse, die zur Vermeidung der Ausbildung von Wasserwalzen dienen, kann ebenso vorteilhaft sein. Die Reynoldszahl liegt bevorzugt oberhalb von 2320. Die Richardsonzahl setzt die Stärke der thermischen Schichtung in ein Verhältnis zur Stärke der Scherung einer Strömung. Sie ist somit eine Maßzahl für das Verhältnis der Größen, die für die Ausbreitung oder das Abklingen der Turbulenz verantwortlich sind. Die Richardsonzahl bezieht sich auf einen lokalen Gradienten an einem Punkt der Strömung, für das erfindungsgemäße Verfahren liegt die Richardsonzahl bei maximal 0,25. Eine Definition der Richardsonzahl findet man u.a. bei H. Kobus (Vorlesungsskript "Gewässerhydraulik" Lehrstuhl für Hydraulik und Grundwasser, Institut für Wasserbau, Universität Stuttgart).

Die erfindungsgemäße wässrige Suspension kann nach dem erfindungsgemäßen Verfahren hergestellt werden und weist vorzugsweise von 0,01 Gew.-% bis 10,00 Gew.-%, bevorzugt von 0,05 bis 5,00 Gew.-% und ganz besonders bevorzugt von 0,10 bis 2,50 Gew.-% an hydrophoben, nanostrukturierten Partikeln auf. Die erfindungsgemäße Suspension weist 0,10 Gew.-% bis 49,98 Gew.-%, besonders bevorzugt von 0,50 Gew.-% bis 49,98 Gew.-% und ganz besonders bevorzugt von 4,00 Gew.-% bis 49,98 Gew.-% an organischem Lösungsmittel, bezogen auf die herzustellende erfindungsgemäße Suspension, auf. Als organisches Lösungsmittel wird vorzugsweise Aceton, Tetrahydrofuran oder ein bei Raumtemperatur flüssigen Alkohol, insbesondere Methanol, Ethanol, n-Propanol und Isopropanol, eingesetzt. Ganz besonders bevorzugt wird Ethanol als Alkohol eingesetzt. Es kann aber auch vorteilhaft sein, wenn die erfindungsgemäße Suspension eine Mischung dieser organischen Lösungsmittel aufweist. Die erfindungsgemäße Suspension weist zumindest 50,01 Gew.-%, vorzugsweise 60,00 Gew.-% und besonders bevorzugt 80,00 Gew.-% Wasser auf.
Die Standzeit der homogenen erfindungsgemäßen Suspension wird mit zunehmenden Gehalt an organischem Lösungsmittel länger. Jedoch ist in jedem Falle ein Aufschütteln vor der Verwendung der erfindungsgemäßen Suspension angeraten. Das Schütteln ist, da eine Agglomerierung der Partikel ausbleibt, ausreichend, um eine erneute homogene Verteilung der Partikel in der erfindungsgemäßen Suspension zu gewährleisten.

Die erfindungsgemäße Suspension kann für die Herstellung von ablösbaren, schmutz- und wasserabweisenden Beschichtungen auf Gegenständen verwendet werden. Ein weiteres erfindungsgemäßes Verfahren beschreibt die Herstellung einer ablösbaren, schmutz- und wasserabweisenden Beschichtung auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist, dadurch gekennzeichnet, dass eine erfindungsgemäße Suspension auf zumindest eine Oberfläche eines Gegenstandes aufgebracht und das Suspensionsmedium anschließend entfernt wird.

Das Aufbringen der erfindungsgemäßen Suspension auf zumindest eine Oberfläche eines Gegenstandes kann auf eine dem Fachmann bekannte Weise erfolgen. Vorzugsweise erfolgt das Aufbringen der erfindungsgemäßen Suspension durch Tauchen des Gegenstandes in die erfindungsgemäßen Suspension und anschließendes Abtropfen oder durch Aufsprühen der erfindungsgemäßen Suspension auf den Gegenstand. Überraschenderweise können insbesondere durch das Aufbringen der Suspension durch Aufsprühen besonders haltbare Beschichtungen, die eine geringere Kratz- und Abriebempfindlichkeit aufweisen, insbesondere auf Polymeroberflächen, erzeugt werden. Dies liegt möglicherweise daran, dass z.B. Alkohol in Wasser auf Polymeroberflächen den Ladungsausgleich erleichtert und so die lokalen elektrischen Felder reduziert werden. Durch diese Reduktion können sich die Partikel leichter in den immer vorhandenen Oberflächenrauhigkeiten verankern. Beim Sprühvorgang lagern sich die Teilchen aufgrund ihrer kinetischen Energie noch fester in die vorhandenen Oberflächenrauhigkeiten der Polymermatrix ein. Vorzugsweise erfolgt das Aufsprühen der erfindungsgemäßen Suspension mittels einer Sprühvorrichtung, die eine Düse mit einem Durchmesser von 0,05 mm bis 2 mm, bevorzugt mit einem Durchmesser von 0,1 mm bis 0,9 mm, aufweist. Vorteilhaft kann es sein, wenn der Manningbeiwert in dem Röhrchen der Sprühvorrichtung Werte unterhalb von 100 annimmt. Nach Garbrecht (http://www.tuharburg.de/wwv/vorlesung/Script-HydromechWS01-5-6.pdf) kann der Manningbeiwert aus der Wandrauhigkeit k wie folgt abgeleitet werden: Manningbeiwert = 26 / k^{1/6}

In einer besonderen Ausführungsform erfolgt das Auftragen der erfindungsgemäßen Suspension mittels eines Sprays. Als Behältnisse können mit Treibmittel beaufschlagte Druckbehältnisse oder sogenannte Pumpsprayflaschen, die umweltschonend ohne zusätzliche Treibmittel auskommen, verwandt werden.

Das Entfernen des Suspensionsmediums, das ein Gemisch aus Wasser und organischem Lösungsmittel ist, der erfindungsgemäßen Suspension erfolgt vorteilhafterweise durch Verdampfung oder Verflüchtigung, wobei das Verdampfen oder Verflüchtigen durch den Einsatz erhöhter Temperaturen oder durch den Einsatz von Unterdruck bzw. Vakuum beschleunigt werden kann.

Die mittels des erfindungsgemäßen Verfahrens hergestellten Beschichtungen sind selbstreinigend und wasserabweisend und weisen vorzugsweise Erhebungen, gebildet durch die Partikel und gegebenenfalls durch die Feinstruktur der Partikel, mit einer mittleren Höhe von 50 nm bis 25 µm und einem mittleren Abstand von maximal 25 µm, vorzugsweise mit einer mittleren Höhe von 100 nm bis 10 µm und/oder einem mittleren Abstand von maximal 10 µm und ganz besonders bevorzugt mit einer mittleren Höhe von 100 nm bis 4 µm und/oder einen mittleren Abstand von maximal 4 µm auf. Ganz besonders bevorzugt weisen die Beschichtungen hergestellt nach dem erfindungsgemäßen Verfahren Erhebungen mit einer mittleren Höhe von 0,05 µm bis 0,5 µm und einem mittleren Abstand von maximal 0,5 µm auf. Unter dem mittleren Abstand der Erhebungen wird im Sinne der vorliegenden Erfindung der Abstand der höchsten Erhebung einer Erhebung zur nächsten höchsten Erhebung verstanden. Hat eine Erhebung die Form eines Kegels, so stellt die Spitze des Kegels die höchste Erhebung der Erhebung dar. Handelt es sich bei der Erhebung um einen Quader, so stellt die oberste Fläche des Quaders die höchste Erhebung der Erhebung dar. Die mittlere Breite der Erhebungen beträgt vorzugsweise von 40 nm bis 25 µm, bevorzugt von 50 nm bis 10 µm und ganz besonders bevorzugt 0,05 bis 0,5 µm. Die mittlere Breite der Erhebungen wird in halber Höhe der Erhebungen gemessen und über die kleinste und größte Breite gemittelt. Die mittlere Breite eines Kegels oder eines Zylinders entspricht somit dem Durchmesser des Zylinders bzw. Kegels in halber Höhe. Die mittlere Breite eines Würfels ergibt sich als das Mittel aus Länge der Seitenfläche plus Länge der Flächendiagonalen.

Die mittels des erfindungsgemäßen Verfahrens hergestellten Beschichtungen weisen vorzugsweise einen Randwinkel für Wasser von größer 130°, bevorzugt größer 140°, besonders bevorzugt größer 145° auf.

Mittels des erfindungsgemäßen Verfahrens können Gegenstände, die auf zumindest einer Oberfläche eine wasser- und schmutzabweisende Beschichtung aufweisen, hergestellt werden. Die Gegenstände bzw. die zu beschichtende Oberflächen können aus den unterschiedlichsten Stoffen, wie z.B. Metall, Kunststoff, Polymer, Holz, Keramik oder Glas bestehen.

Die erfindungsgemäße Schutzbeschichtung kann gemäß dem erfindungsgemäßen Verfahren zur Herstellung von ablösbaren, wasser- und schmutzabweisenden Beschichtungen auf Gegenständen, hergestellt werden. Diese erfindungsgemäße Schutzbeschichtung kann durch das Aufprallen von Flüssigkeit mit einem Impuls von größer 12 mNs von der Oberfläche des Gegenstandes entfernt werden, beispielsweise durch Behandlung mit Flüssigkeitstropfen, die mit einem Impuls größer 12 mNs auf die Oberfläche auftreffen. Dieser Wert entspricht dem Impuls eines durchschnittlichen Regentropfens, der mit der doppelten Geschwindigkeit zur Erde fällt, wie es in der Natur normalerweise vorzufinden ist. Die erfindungsgemäßen Schutzbeschichtungen lassen sich somit auf einfache Weise durch einem Wasserstrahl wieder von dem beschichteten Gegenstand ablösen. Vorzugsweise ist die Schutzbeschichtung mittels eines Wasserstrahls vom Gegenstand ablösbar, der einen Impuls größer 12 mNs und kleiner 60 mNs, vorzugsweise kleiner 30 mNs und größer 15 mNs hat. Zum Ablösen der Schutzbeschichtung sind keine Detergenzien im Wasser notwendig.

Die erfindungsgemäße Schutzbeschichtung kann zum Schutz von Gegenständen, wie z.B. Werkzeugmaschinen oder Transportmittel, wie z.B. Schiffe, Flugzeuge, Fahrräder oder Kraftfahrzeuge, wie z.B. Autos, Busse, Lastkraftwagen oder Motorräder, und Waren vor Verschmutzung beim Transport und in Verkaufs- oder Präsentationsräumen eingesetzt werden. Weiterhin sind Anwendungen zum Schutz von umpackten Waren, d.h. Waren die beispielsweise für den Transport Verpackungsmaterial aufweisen, die im schmutzgefährdeten Außenbereich zwischengelagert werden müssen, beansprucht.

Des weiteren kann die erfindungsgemäße Schutzbeschichtung zum Schutz von Gegenständen, Folien und Textilien vor hoher Belastung durch Schmutz und/oder Wasser bei OutdoorAktivitäten, in der Freizeit oder bei der Ausübung des Berufs eingesetzt werden, insbesondere bei Gegenständen und Textilien für den Ski-, Alpin-, Motor-, Motorrad-, Motorcross- und Segelsport. Vorteilhaft kann die erfindungsgemäße Schutzbeschichtung bei technischen Textilien und Gewebe des textilen Bauens, ausgewählt aus Zelten, Markisen, Regenschirmen, Tischdecken, Kabrio-Verdecken, oder bei der Arbeitsbekleidung sein.

Außerdem können Imprägniersprays die erfindungsgemäße Suspension aufweisen. Mit solchen Sprays lassen sich z.B. Gartenmöbel, Autofelgen, Autolacke, Duschen, Fliesen, Flächen im Sanitärbereich allgemein, Waschküchen und ähnliches mit ablösbaren schmutz- und wasserabweisenden Beschichtungen ausrüsten. Ein solches Imprägnierspray weist als Wirkstoff vorzugsweise eine erfindungsgemäße Suspension von hydrophoben Partikeln in einem überwiegend wässrigen Medium wie oben beschrieben auf.

Die erfindungsgemäßen Verfahren sowie deren Verwendung wird im folgenden beispielhaft beschrieben, ohne dass die Erfindung darauf beschränkt sein soll.

### Beispiel 1: Herstellung der erfindungsgemäßen Suspensionen

In einem Ultraturax wurde Aerosil^{®} VP LE 8241 in suspendiert. Zu der hochkonzentrierten Suspension von Aerosil^{®} in Ethanol wurde unter Verwendung eines Ultraturax vollentmineralisiertes Wasser zugegeben und heftig durchmischt. Anschließend wurde die erfindungsgemäße Suspension in Sprühflaschen abgefüllt.

Die Tabelle 1 zeigt eine Zusammenstellung der Versuchsparameter von Beispiel 1.

**Tabelle 1:**

| **Versuchsnummer** | **1** | **2** | **3** |
|---|---|---|---|
| **Menge an vollentmineralisierten Wasser** (in Gew.-%) | 92 | 79 | 59 |
| **Menge an Ethanol** (in Gew.-%) | 7 | 20 | 40 |
| **Menge an Aerosil^{®} VP LE 8241** (in Gew.-%) | 1 | 1 | 1 |

### Beispiel 2: Aufsprühen der erfindungsgemäßen Suspension auf Oberflächen

Die erfindungsgemäßen Suspensionen wurden gemäß Beispiel 1 hergestellt und mittels einer Sprühflasche auf die Oberfläche der Prüfkörper (2 mm Dicke Platten aus Polymethylmethacrylat (PMMA)) aufgetragen und anschließend wurde das Lösungsmittel bzw. Lösungsmittelgemisch mittels Verdampfen bei Raumtemperatur über Nacht entfernt. Die Charakterisierung der Oberflächen erfolgte anfänglich visuell und ist für alle drei Suspensionen mit +++ protokolliert. +++ bedeutet, Wassertropfen bilden sich nahezu vollständig aus. Der Abrollwinkel liegt unterhalb von 10°.

## Patentansprüche

1. Verfahren zur Herstellung einer tensidfreien Suspension, die hydrophobe Partikel und zumindest 50,01 Gew.-% Wasser aufweist,
**dadurch gekennzeichnet,**
**dass** hydrophobe, nanostrukturierte Partikel, ausgewählt aus Mineralien, Aluminiumoxid, Silikaten, Kieselsäuren, Metalloxiden, Mischoxiden, Metallpulvern, Pigmenten oder Polymeren, in zumindest einem organischen Lösungsmittel, das mit Wasser mischbar ist und das einen Siedepunkt kleiner 150°C aufweist, suspendiert werden und anschließend diese konzentrierte organische Suspension mit tensidfreiem Wasser intensiv durchmischt wird, wobei als nanostrukturierte Partikel solche Partikel eingesetzt werden, die auf der Oberfläche unregelmäßige Strukturen mit Höhen, Breiten und Abständen im Bereich von 1 nm bis 1000 nm aufweisen.

2. Verfahren gemäß Anspruch 1,
**dadurch gekennzeichnet,**
**dass** Partikel eingesetzt werden, die einen mittleren Partikeldurchmesser von 0,01 µm bis 100 µm aufweisen.

3. Verfahren gemäß einem der Ansprüche 1 bis 2,
**dadurch gekennzeichnet,**
**dass** Partikel eingesetzt werden, die einen mittleren Partikeldurchmesser von 0,05 µm bis 30 µm aufweisen.

4. Verfahren gemäß zumindest einem der Ansprüche 1 bis 3,
**dadurch gekennzeichnet,**
**dass** die Partikel nach einer Behandlung mit zumindest einer Verbindung aus der Gruppe der Alkylsilane, Fluoralkylsilane und/oder Disilazane hydrophobe Eigenschaften aufweisen.

5. Verfahren gemäß zumindest einem der Ansprüche 1 bis 4,
**dadurch gekennzeichnet,**
**dass** als organisches Lösungsmittel Aceton oder Tetrahydrofuran eingesetzt wird.

6. Verfahren gemäß zumindest einem der Ansprüche 1 bis 4,
**dadurch gekennzeichnet,**
**dass** als organisches Lösungsmittel ein Alkohol eingesetzt wird.

7. Verfahren gemäß Anspruch 6,
**dadurch gekennzeichnet,**
**dass** ein Alkohol ausgewählt aus Methanol, Ethanol, n-Propanol oder Isopropanol eingesetzt wird.

8. Wässrige Suspension hergestellt nach einem Verfahren gemäß zumindest einem der Ansprüche 1 bis 7.

9. Suspension gemäß Anspruch 8,
**dadurch gekennzeichnet,**
**dass** sie 0,10 Gew.-% bis 2,50 Gew.-% an suspendieren hydrophoben Partikeln bezogen auf die Suspension aufweist.

10. Suspension gemäß Anspruch 8,
**dadurch gekennzeichnet,**
**dass** sie eine Menge an Alkohol bezogen auf die Suspension von 0,10 Gew.-% bis 49,98 Gew.-% aufweist.

11. Suspension gemäß Anspruch 8,
**dadurch gekennzeichnet,**
**dass** sie zumindest 60,00 Gew.-% Wasser bezogen auf die Suspension aufweist.

12. Verwendung der Suspension hergestellt gemäß zumindest einem der Ansprüche 1 bis 7 zur Herstellung von ablösbaren, schmutz- und wasserabweisenden Beschichtungen auf Gegenständen.

13. Verfahren zur Herstellung einer ablösbaren, schmutz- und wasserabweisenden Beschichtung auf Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist,
**dadurch gekennzeichnet,**
**dass** eine Suspension hergestellt gemäß zumindest einem der Ansprüche 1 bis 7 auf zumindest eine Oberfläche eines Gegenstandes aufgebracht und das Suspensionsmedium anschließend entfernt wird.

14. Verfahren gemäß Anspruch 13,
**dadurch gekennzeichnet,**
**dass** das Aufbringen der Suspension auf zumindest eine Oberfläche eines Gegenstandes durch Tauchen des Gegenstandes in die Suspension erfolgt.

15. Verfahren gemäß Anspruch 13,
**dadurch gekennzeichnet,**
**dass** das Aufbringen der Suspension auf zumindest eine Oberfläche eines Gegenstandes durch Aufsprühen der Suspension erfolgt.

16. Verfahren gemäß Anspruch 15,
**dadurch gekennzeichnet,**
**dass** die Suspension mittels eines Sprays aufgetragen wird.

17. Gegenstände, die auf zumindest einer Oberfläche eine wasser- und schmutzabweisende Beschichtung aufweisen, hergestellt nach einem Verfahren gemäß zumindest einem der Ansprüche 13 bis 16.

18. Schutzbeschichtung hergestellt gemäß einem der Ansprüche 13 bis 16.

19. Schutzbeschichtung gemäß dem Anspruch 18,
**dadurch gekennzeichnet,**
**dass** die Schutzbeschichtung durch das Aufprallen von Flüssigkeit mit einem Impuls größer 12 mNs von der Oberfläche des Gegenstandes entfernt werden kann.

20. Schutzbeschichtung gemäß Anspruch 18 oder 19,
**dadurch gekennzeichnet,**
**dass** die Schutzbeschichtung zum Schutz von Gegenständen, Folien oder Textilien vor hoher Belastung durch Schmutz und/oder Wasser bei Outdooraktivitäten, in der Freizeit oder beim Ausüben des Berufs eingesetzt wird.

21. Schutzbeschichtung gemäß Anspruch 18 oder 19,
**dadurch gekennzeichnet,**
**dass** die Schutzbeschichtung zum Schutz von Gegenständen und Waren vor Verschmutzung beim Transport oder in Verkaufs- und Präsentationsräumen eingesetzt wird.

22. Schutzbeschichtung gemäß Anspruch 18 oder 19,
**dadurch gekennzeichnet,**
**dass** die Schutzbeschichtung zum Schutz vor Schmutz und/oder Wasser von technischen Textilien und Gewebe des textilen Bauens eingesetzt wird.

23. Imprägnierspray, welches eine Suspension gemäß einem der Ansprüche 8 bis 11 aufweist.

## Claims

1. Process for preparing a surfactant-free suspension including hydrophobic particles and at least 50.01% by weight of water,
**characterized in that**
hydrophobic, nanostructured particles selected from minerals, aluminum oxide, silicates, silicas, metal oxides, mixed oxides, metal powders, pigments, and polymers are suspended in at least one organic solvent miscible with water and having a boiling point below 150°C, and then this concentrated organic suspension is intensively and thoroughly mixed with surfactant-free water, where the nanostructured particles used are particles whose surface has irregular structures with heights, widths and separations in the range from 1 nm to 1000 nm.

2. Process according to Claim 1,
**characterized in that**
use is made of particles whose average diameter is from 0.01 to 100 µm.

3. Process according to Claim 1 or 2,
**characterized in that**
use is made of particles whose average diameter is from 0.05 to 30 µm.

4. Process according to at least one of Claims 1 to 3,
**characterized in that**
the particles have hydrophobic properties after treatment with at least one compound from the group consisting of the alkylsilanes, fluoroalkylsilanes and disilazanes.

5. Process according to at least one of Claims 1 to 4,
**characterized in that**
acetone or tetrahydrofuran is used as organic solvent.

6. Process according to at least one of Claims 1 to 4,
**characterized in that**
an alcohol is used as organic solvent.

7. Process according to Claim 6,
**characterized in that**
use is made of an alcohol selected from methanol, ethanol, n-propanol, and isopropanol.

8. Aqueous suspension prepared by a process according to at least one of Claims 1 to 7.

9. Suspension according to Claim 8,
**characterized in that**
it has from 0.10 to 2.50% by weight of suspended hydrophobic particles, based on the suspension.

10. Suspension according to Claim 8,
**characterized in that**
it has from 0.10 to 49.98% by weight of alcohol, based on the suspension.

11. Suspension according to Claim 8,
**characterized in that**
it has at least 60.00% by weight of water, based on the suspension.

12. Use of the suspension prepared according to at least one of Claims 1 to 7 for producing detachable dirt- and water-repellant coatings on articles.

13. Process for producing a detachable, dirt- and water-repellant coating on articles, where, during the coating process, hydrophobic particles are applied to the surface of the articles and thus a surface structure with elevations is produced on the surface of the articles, and has dirt- and water-repellant properties,
**characterized in that**
a suspension prepared according to at least one of Claims 1 to 7 is applied to at least one surface of an article, and then the suspension medium is removed.

14. Process according to Claim 13,
**characterized in that**
the application of the suspension to at least one surface of an article takes place by dipping the article into the suspension.

15. Process according to Claim 13,
**characterized in that**
the application of the suspension to at least one surface of an article takes place by spray-application of the suspension.

16. Process according to claim 15,
**characterized in that**
a spray is used to apply the suspension.

17. Articles which have, on at least one surface, a water- and dirt-repellant coating produced by a process according to at least one of Claims 13 to 16.

18. Protective coating produced according to any of Claims 13 to 16.

19. Protective coating according to Claim 18,
**characterized in that**
the protective coating can be removed from the surface of the article by impact from a liquid with momentum greater than 12 mNs.

20. Protective coating according to Claim 18 or 19,
**characterized in that**
the protective coating is used to protect articles, films or textiles from high levels of contamination by dirt and/or water during outdoor activities, during leisure or during work.

21. Protective coating according to Claim 18 or 19,
**characterized in that**
the protective coating is used to protect articles and products from contamination during transport or in spaces used for purposes of sales or of presentations.

22. Protective coating according to Claim 18 or 19,
**characterized in that**
the protective coating is used for protection, from dirt or water, of technical textiles and fabrics used for textile buildings.

23. Impregnating spray which comprises a suspension according to any of Claims 8 to 11.

## Revendications

1. Procédé pour la préparation d'une suspension sans tensioactif, qui comporte des particules hydrophobes et au moins 50,01 1 % en poids d'eau, **caractérisé en ce qu'**on met en suspension des particules nanostructurées, hydrophobes, choisies parmi des minéraux, l'oxyde d'aluminium, des silicates, des acides siliciques, des oxydes métalliques, des oxydes mixtes, des poudres métalliques, des pigments ou des polymères, dans au moins un solvant organique qui est miscible à l'eau et qui présente un point d'ébullition inférieur à 150 °C, et ensuite on homogénéise intensément cette suspension organique concentrée avec de l'eau sans tensioactif, en utilisant comme particules nanostructurées des particules qui présentent sur la surface des structures irrégulières à hauteurs, largeurs et espacements dans la plage de 1 nm à 1 000 nm.

2. Procédé selon la revendication 1, **caractérisé en ce qu'**on utilise des particules qui présentent un diamètre moyen de particule de 0,01 µm à 100 µm.

3. Procédé selon la revendication 1 ou 2, **caractérisé en ce qu'**on utilise des particules qui présentent un diamètre moyen de particule de 0,05 µm à 30 µm.

4. Procédé selon au moins l'une des revendications 1 à 3, **caractérisé en ce qu'**après un traitement par au moins un composé choisi dans le groupe des alkylsilanes, fluoroalkylsilanes et/ou disilazanes, les particules présentent des propriétés hydrophobes.

5. Procédé selon au moins l'une des revendications 1 à 4, **caractérisé en ce qu'**on utilise comme solvant organique l'acétone ou le tétrahydrofuranne.

6. Procédé selon au moins l'une des revendications 1 à 4, **caractérisé en ce qu'**on utilise comme solvant organique un alcool.

7. Procédé selon la revendication 6, **caractérisé en ce qu'**on utilise un alcool choisi parmi le méthanol, l'éthanol, le n-propanol ou l'isopropanol.

8. Suspension aqueuse préparée conformément à un procédé selon au moins l'une des revendications 1 à 7.

9. Suspension selon la revendication 8, **caractérisée en ce que** qu'elle comporte de 0,10 % en poids à 2,50 % en poids de particules hydrophobes en suspension, par rapport à la suspension.

10. Suspension selon la revendication 8, **caractérisée en ce que** qu'elle comporte une quantité d'alcool, par rapport à la suspension, de 0,10 % en poids à 49,98 % en poids.

11. Suspension selon la revendication 8, **caractérisée en ce que** qu'elle comporte au moins 60,00 % en poids d'eau, par rapport à la suspension.

12. Utilisation de la suspension préparée selon au moins l'une des revendications 1 à 7, pour la production de revêtements détachables, antisalissure et hydrofuges sur des objets.

13. Procédé pour la production de revêtements détachables, antisalissure et hydrofuges sur des objets, dans lequel on applique lors de l'enduction des particules hydrophobes sur la surface des objets et on engendre ainsi sur la surface des objets une structure superficielle comportant des saillies, qui présente les propriétés antisalissure et hydrofuges, **caractérisé en ce qu'**on applique sur au moins une surface d'un objet une suspension préparée selon au moins l'une des revendications 1 à 7 et ensuite on élimine le milieu de suspension.

14. Procédé selon la revendication 13, **caractérisé en ce que** l'application de la suspension sur au moins une surface d'un objet s'effectue par trempage de l'objet dans la suspension.

15. Procédé selon la revendication 13, **caractérisé en ce que** l'application de la suspension sur au moins une surface d'un objet s'effectue par pulvérisation de la suspension.

16. Procédé selon la revendication 15, **caractérisé en ce que** la suspension est appliquée au moyen d'un aérosol.

17. Objets qui comportent sur au moins une surface un revêtement antisalissure et hydrofuge, produit conformément à un procédé selon au moins l'une des revendications 13 à 16.

18. Revêtement protecteur produit selon l'une quelconque des revendications 13 à 16.

19. Revêtement protecteur selon la revendication 18, **caractérisé en ce que** le revêtement protecteur peut être éliminé de la surface de l'objet par impact de liquide avec une impulsion supérieure à 12 mNs.

20. Revêtement protecteur selon la revendication 18 ou 19, **caractérisé en ce que** le revêtement protecteur est utilisé pour la protection d'objets, de films ou de textiles avant une forte sollicitation par la salissure et/ou l'eau dans des activités de plein air, dans le loisir ou dans l'exercice de la profession.

21. Revêtement protecteur selon la revendication 18 ou 19, **caractérisé en ce que** le revêtement protecteur est utilisé pour la protection d'objets et d'articles contre la salissure lors du transport ou dans des espaces de vente et de présentation.

22. Revêtement protecteur selon la revendication 18 ou 19, **caractérisé en ce que** le revêtement protecteur est utilisé pour la protection de textiles industriels et de tissus de la construction textile contre la salissure et/ou l'eau.

23. Aérosol d'imprégnation, qui comporte une suspension selon l'une quelconque des revendications 8 à 11.
